# EUROPÄISCHE PATENTSCHRIFT

(11) **EP 0 534 477 B1**
(45) Veröffentlichungstag und Bekanntmachung des Hinweises auf die Patenterteilung: **06.03.1996**
(21) Anmeldenummer: 92116491.9
(22) Anmeldetag: 25.09.1992
(51) Int. Cl.: G03B 17/53, G03B 13/18

(54) **Einrichtung zum Herstellen von Passfotos oder dergleichen**
Device for taking passport photos or the like
Dispositif pour fabriquer des photos de passeports ou similaires

(30) Priorität: 26.09.1991 DE 9112040 U
(43) Veröffentlichungstag der Anmeldung: 31.03.1993
(73) Patentinhaber: SCHLUMPRECHT, Martin, D-94469 Deggendorf (DE)
(72) Erfinder: Hebeisen, Walter, W-8390 Passau (DE)
(74) Vertreter: Säger, Manfred, Dipl.-Ing.

(56) Entgegenhaltungen:
- WO-A-88/02500
- DE-B- 2 301 299

## Beschreibung

Die Erfindung betrifft eine Einrichtung gemäß dem Oberbegriff des Hauptanspruchs.

Solche auch als Fotoautomaten bekannten Einrichtungen sind in einer Vielzahl von Ausführungsformen bekannt, z.B. aus der DE-A-23 01 299 und aus der WO-A-88 02 500. Sie dienen dazu, daß die zu fotografierende Person die Einrichtung selbst bedienen und in Gang setzen kann. Um für verschieden große Personen die richtige Höhe einstellen zu können, sind entweder höhenverstellbare Schemel in der Aufnahmekammer vorgesehen, oder aber der Spiegel ist so verstellbar, daß der richtige Bildausschnitt eingestellt werden kann.

Von Nachteil bei diesen bekannten Vorrichtungen ist die fehlende Einstellmöglichkeit für den Abstand der Person zur Kamera, die zum einen nicht störend für die Person, zum anderen für die Aufnahme wäre, um sicher zu stellen, daß die Person zwar den richtigen Bildausschnitt wählt, der Abstand von der Kamera jedoch zu nah oder zu weit wäre und damit zu unscharfen Bildern oder Bildern mit zu wenig Detailtreue führen würde.

Der Erfindung liegt die Aufgabe zugrunde, eine Einrichtung gemäß dem Oberbegriff des Hauptanspruchs so weiterzubilden, daß in einfacher Weise eine Einstellmöglichkeit für den optimalen Abstand zwischen der aufzunehmenden Person und der Kamera bereitgestellt wird.

Diese Aufgabe wird erfindungsgemäß durch die Merkmale des Hauptanspruchs gelöst.

Die erfindungsgemäße Lehre besteht also darin, einen selbst leuchtenden, oder vorzugsweise indirekt beleuchteten Rahmen vorzusehen, dessen leuchtende Seite nur in Richtung auf die Öffnung zugewandt ist und in dem Strahlengang zwischen Öffnung und Kamera so bemessen ist, daß er bei der Aufnahme nicht auf dem Bild erscheint, andererseits von der Person durch den halbdurchlässigen Spiegel, der vorzugsweise an der Öffnung angebracht ist, gesehen werden kann. Somit kann sie Anordnung und Lage der Aufnahme auf dem fertigen Foto bemessen und einschätzen. Hinzu kommt aber als wesentliches Kriterium, daß der von der Person durch den halbdurchlässigen Spiegel gesehene Rahmen auch eine räumliche Information vermittelt, in dem beim Näherbewegen in Richtung auf die Öffnung die Person in dem halbdurchlässigen Spiegel den Eindruck hat, als würde sie sich auf den Leuchtrahmen hinzubewegen. Somit kann man beispielsweise der Person eine klare Anweisung geben, daß sie den Kopf so weit "durch den Leuchtrahmen hindurchstecken" soll, bis die Augen, Mund, Nase oder dergleichen sich genau in der Ebene des Leuchtrahmens befinden.

Zweckmäßige Ausgestaltungen und Weiterbildungen der Erfindung sind in dem Unteranspruch gekennzeichnet.

Ein bevorzugtes Ausführungsbeispiel der Erfindung wird nachfolgend unter Bezugnahme auf die Zeichnung näher erläutert. In dieser zeigt:
- Figur 1: die Einrichtung zur Herstellung von Paßfotos, in schematischer Draufsicht.
- Figur 2: einen Schnitt II-II gemäß Figur 1.
- Figur 3: eine Einzelheit gemäß Figur 1.

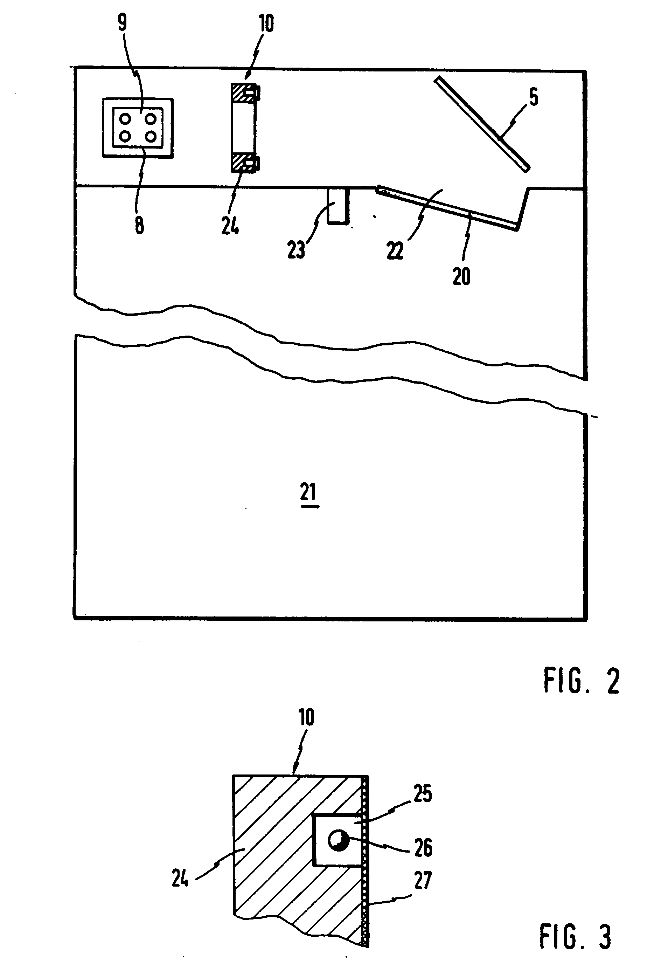

Die Einrichtung weist einen insgesamt mit 15 bezeichneten Schrank mit einer Aufnahmeeinrichtung auf. Hierbei sind im oberen Bereich des Schrankes mittels eines Schalters 1 anschaltbare Blitzlampen 2, 3 für die Beleuchtung der zu fotografierenden Person sowie eine Leuchtstoffröhre der zur Beleuchtung der Aufnahmekammer 21 (Figur 2) auf. Dieser obere Bereich ist mittels einer Milchglasscheibe 13 von der Aufnahmekammer 21 und von dem übrigen Schrank 15 mittels einer undurchlässigen Trennwand 14 verbunden.

Im unteren Bereich 16 des Schrankes 15 ist die insgesamt mit 8 bezeichnete Kamera angeordnet. Dieser Bereich ist vollständig ebenfalls mittels einer Trennwand 17 von dem übrigen Bereich des Schrankes 15 abgetrennt, lediglich für das Objektiv der Kamera ist ein Durchlaß vorhanden (mit 9 bezeichnet).

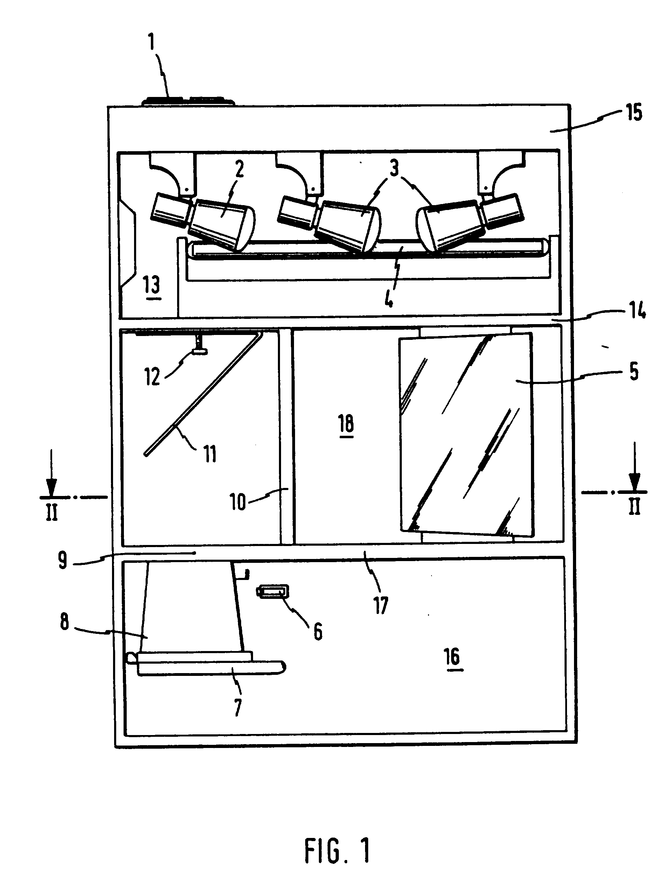

Im mittleren Bereich 18 des Schrankes 15 ist ein erster Spiegel 11, etwa im 45^{o}-Winkel zur optischen Achse der Kamera 8 angeordnet und mittels einer Einstellschraube 12 in seiner Lage einstellbar. Der erste Spiegel 11 ist ferner senkrecht zur Zeichenebene gemäß Figur 1 ausgerichtet. Es ist ferner ein zweiter Spiegel 5 im mittleren Bereich 18 des Schrankes 15 angeordnet, der winklig zur Zeichenebene gemäß Figur 1, wie in Figur 2 dargestellt ist, angestellt ist.

Weiterhin ist zwischen dem zweiten Spiegel 5 und der Kammer 21 eine Öffnung 22 vorgesehen, in die die zu fotografierende Person hineinblickt. Diese Öffnung 22 ist mittels eines halbdurchlässigen Spiegels 20 verschlossen. Weiterhin ist eine weitere, hier nicht näher interessierende Auslöseeinrichtung 23 für die Kamera 8 vorgesehen.

Zwischen der Kamera 8 bzw. dem ersten Spiegel 11 und dem zweiten Spiegel 5 ist der insgesamt mit 10 bezeichnete Leuchtrahmen angeordnet.

Wie in Figur 2 näher dargestellt, besteht der Leuchtrahmen 10 aus vier zueinander rechtwinklig angeordneten Leisten, die eine in Draufsicht rechteckförmige Durchtrittsfläche belassen. Die Leisten 24, deren Querschnitt in Figur 3 näher dargestellt ist, sind an ihrer Vorderseite mit einer umlaufenden Ausnehmung 25 versehen, in der ein Leuchtband oder eine Vielzahl schwach leuchtender Lampen 26 mit Abstand voneinander angeordnet sind. Diese Ausnehmung 25 ist ferner mittels eines schwarzen Stoffes 27 abgedeckt. Die nur in Richtung auf den zweiten Spiegel 5 ausgerichteten Ausnehmungen 25 reflektieren das Licht nur in Richtung auf den zweiten Spiegel 5 indirekt infolge der Abdeckung 27, zum Beispiel aus schwarzem, schwach lichtdurchlässigen Stoff, so daß die in den halbdurchlässigen Spiegel schauende, sich selbst betrachtende Person zum einen eine Information über Lage ihres Gesichtes in dem zu fotografierenden Feld erhält (der Leuchtrahmen markiert in dem Spiegel einen Bereich, der verglichen mit dem abgelichteten Bereich auf dem fertigen Foto kleiner als dessen äußerste Abbildungsumrisse ist. Außerdem ist der Rahmen 10 optisch so angebracht, daß die Person ihn räumlich im Bereich ihres Gesichtsfeldes angeordnet empfindet, wodurch ein von der Person selbst zu kontrollierendes Abstandsmaß für ein scharfes und detailreiches Foto vorhanden ist.

## Patentansprüche

1. Einrichtung zum Herstellen von Paßfotos oder dergleichen mit einer beleuchtbaren Aufnahmekammer (21) für die zu fotografierende Person und mit einer in einem Schrank (15) angeordneten Aufnahmeeinrichtung mit einer vorzugsweise von der Person selbst auslösbaren Kamera (8), einer Öffnung (22) zwischen der Aufnahmeeinrichtung (8) und der Aufnahmekammer (21) und zumindest einem zwischen der Öffnung (22) und der Kamera (8) angeordneten halbdurchlässigen Spiegel (20), dadurch gekennzeichnet, daß zwischen der Kamera (8) und dem halbdurchlässigen Spiegel (20) ein Leuchtrahmen (10) so angeordnet ist, daß dessen Licht auf den haldurchlässigen Spiegel (20) gerichtet ist und daß seine Grösse und Lage für die zu fotografierende Person einerseits den Bildausschnitt, andererseits den zur Erzielung eines scharfen Bildes richtigen Abstand der Person von der Kamera (8) markieren.

2. Einrichtung nach Anspruch 1, dadurch gekennzeichnet, daß die Öffnung (22) von dem halbdurchlässigen Spiegel (20) verschlossen ist.

## Claims

1. Apparatus for producing passport photographs or the like having an illuminatable recording chamber (21) for the person to be photographed, and a recording device arranged in a cabinet (15), with a camera (8) which can preferably be triggered by the person him or herself, an opening (22) between the recording device (8) and the recording chamber (21), and at least one semi-transparent mirror (20) arranged between the opening (22) and the camera (8), characterised in that an illuminating frame (10) is so arranged between the camera (8) and the semi-transparent mirror (20) that the light thereof is directed on to the semi-transparent mirror (20) and that its size and position mark for the person to be photographed on the one hand the image area and on the other hand the distance of the person from the camera (8), which is the correct distance to produce a sharp image.

2. Apparatus according to claim 1 characterised in that the opening (22) is closed by the semi-transparent mirror (20).

## Revendications

1. Dispositif pour la réalisation de photographies d'identité ou analogues, comportant une cabine de prise de vue (21) pour la personne à photographier ainsi qu'un dispositif de prise de vue disposé dans une armoire (15), équipé d'un appareil photographique (8) pouvant être déclenché de préférence par la personne elle-même, une ouverture (22) entre le dispositif de prise de vue (8) et la cabine (21), et au moins un miroir semi-transparent (20) disposé entre ladite ouverture (22) et l'appareil photographique (8), caractérisé en ce que entre l'appareil (8) et le miroir semi-transparent (20), un cadre rétro-éclairé (10) est disposé de telle manière que sa lumière se dirige sur ledit miroir semi-transparent (20) et que ses dimensions et sa position montrent à la personne à photographier, d'une part, le cadre de l'image et, d'autre part, la distance correcte entre elle-même et l'appareil photographique (8) pour obtenir une image nette.

2. Dispositif selon la revendication 1, caractérisé en ce que l'ouverture (22) est obturée par le miroir semi-transparent (20).
